# EUROPEAN PATENT APPLICATION

(11) **EP 1 156 409 A2**
(43) Date of publication of application: **21.11.2001**
(21) Application number: 01111157.2
(22) Date of filing: 10.05.2001
(51) Int. Cl.: G06F 3/12

(54) **Method and system for enhancing the printing performance of a bitmap-containing file**

(30) Priority: 17.05.2000 US 573138
(71) Applicant: Heidelberger Druckmaschinen Aktiengesellschaft, 69115 Heidelberg (DE)
(72) Inventor: Hansen, David Robert, Honeoye Falls, NY 14472 (US); Holzwarth, Robert K., Palmryo, NY 14522 (US)
(74) Representative: Franzen, Peter

(57) **Abstract**

A method and system of enhancing the printing performance of a bitmap-containing file facilitates a reduction in the processing resources or processing time required to print the bitmap-containing file. The bitmap-containing file may comprise a Tagged Image File Format (TIFF) file or any other file that contains an image expressed as at least one bitmap. The bitmap-containing file is received from a source. The bitmap-containing file includes a data component and a directory component. The data component contains an image stored as at least one bitmap. Printing settings are placed within the directory component. The print settings are preferably formatted as textual data in the directory component to facilitate efficient treatment by an interpreter of a printer

## Description

### FIELD OF THE INVENTION

This invention relates to a method and system for enhancing the printing performance of a bitmap-containing file, such as a Tagged Image File Format (TIFF) file.

### BACKGROUND OF THE INVENTION

A bitmap-containing file expresses an image as one or more bitmaps. Bitmaps may be defined in terms of rows and columns of pixels, where the density of the rows and columns determines the resolution of the image. For a color image or different levels of luminance, multiple bitmaps are overlaid or closely spaced to each other. A bitmap-containing file may be used for storing, exchanging, and printing images.

A Tagged Image File Format (TIFF) is a standard file format for storing an image as one or more bit maps. TIFF supports different sizes, resolution levels, and color attributes of an image. The latest TIFF specification (e.g., TIFF Revision 6.0 at the time of this application) may be available from Adobe Systems Incorporated.

Many companies have established large document libraries based on TIFF images. The TIFF file format is sometimes preferred over other Page Description Language (PDL) formats because TIFF offers greater data security associated with a bit-mapped version of an image, as opposed to a textual version of the image. A textual version of the image includes a Rich Text Format (RTF) or American Standard Code for Information Interchange (ASCII) version, which tends to be susceptible to inadvertent or intentional corruption. The TIFF format may be readily encrypted and decrypted with consistent results to enhance security of the TIFF images. Moreover, even if the TIFF format is not encrypted, the TIFF images may be readily encoded with error correction and/or error detection schemes to promote data integrity. Accordingly, TIFF images are well-suited for applications requiring data integrity and security.

To date, TIFF printing has been somewhat cumbersome because of the inability to specify production print settings and the lack of suitable printing equipment for high performance printing in a production printing environment. Production print settings include features such as duplexing (i.e., making two-sided copies from various original formats), binding, pamphlet making, or other suitable characteristics applicable to mass printing procedures. Currently, a common solution to production printing of TIFF files involves "wrapping" the TIFF files within a PostScript (PS) or Portable Document Format (PDF) file. A PostScript file is a file that expresses an image in an object-oriented language in terms of vector graphics. PostScript page description language is a trademark of Adobe Systems Incorporated. Portable document format (PDF) is a file format developed by Adobe Systems Incorporated. The PDF format accepts formatting information from a variety of applications and provides a standard format that can be interchanged among different users. Portable Data Format is a trademark of Adobe Systems Incorporated.

If a TIFF is wrapped within a PS or PDF file, the resultant wrapped file supports the attachment of production print settings in a sub-optimal manner.

Processing resources and processing time are expended to encode (i.e., wrap) a TIFF file as a page description language file and to decode the page description file into a TIFF file to facilitate printing of the file. The wrapped TIFF file requires extensive processing resources and greater time than would otherwise be necessary to interpret a standard TIFF file. In the prior art, an elaborate two-step procedure is used to properly interpret a wrapped TIFF file. First, a PS or PDF interpreter interprets TIFF file, which adds significant processing-time overhead in "unwrapping" the PS or PDF shell to get access to the TIFF data. Second, a TIFF interpreter may interpret the unwrapped TIFF data or the unwrapped data may be converted to a format compatible with the PS or PDF interpreter. Therefore, the design of printing equipment may become complex and costly to handle two levels of decoding for wrapped TIFF documents. Still, the operator of the printing equipment experiences undesired delay associated with decoding the wrapped TIFF document. Thus, a need exists for enhancing the printing performance of a bitmap containing file to reduce the printing time, while supporting a full assortment of print settings, such as production print settings.

### BRIEF SUMMARY OF THE INVENTION

In accordance with the invention, a method and system of enhancing the printing performance of a bitmap-containing file facilitates a reduction in the processing resources or processing time required to print the bitmap-containing file. The bitmap-containing file may comprise a tagged image file format (TIFF) file or any other file that contains an image expressed as at least one bitmap. The bitmap-containing file is received from a source. The bitmap-containing file includes a data component and a directory component. The data component contains an image stored as at least one bitmap. The directory component may contain reference information on the organization of the data component or the bitmap-containing file. Print settings (e.g., production print settings) are placed within the directory component (e.g., an additional image file directory block). The production print settings are preferably formatted as textual data in the directory component.

### BRIEF DESCRIPTION OF THE DRAWINGS

- FIG. 1: is a block diagram of a system for enhancing the printing of a bitmapcontaining file in accordance with the invention.
- FIG. 2: is a flow chart of a method for enhancing the printing of a bitmapcontaining file in accordance with the invention.
- FIG. 3: is a flow chart of a supplemental method for enhancing the printing of a bitmap-containing file in accordance with the invention.
- FIG. 4: is a diagram of an illustrative data structure of a bitmap-containing file in accordance with one embodiment of the invention.
- FIG. 5: is a block diagram of an alternate embodiment of a system for enhancing the printing of a bitmap-containing file in accordance with the invention.

### DETAILED DESCRIPTION OF THE PREFERRED EMBODIMENTS

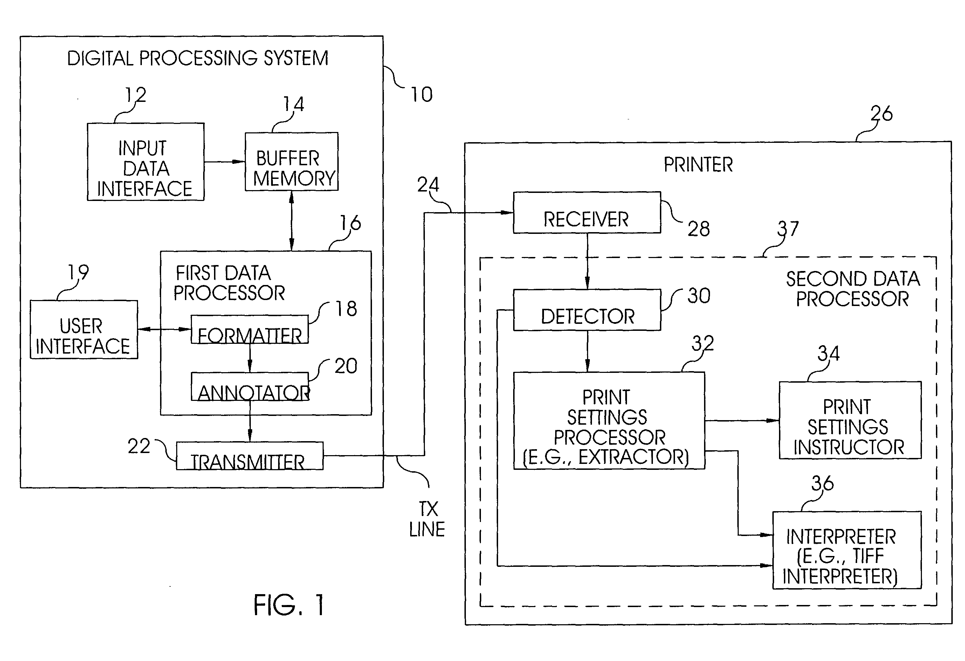

In accordance with one embodiment of the invention, FIG. 1 shows a system for enhancing the printing of a bitmap-containing file. FIG. 1 includes a digital processing system 10 coupled to a printer 26 via a transmission line 24. As shown in FIG. 1, the arrows generally indicate the direction of data flow for explanatory purposes, although in practice communications between different components of the system may be unidirectional or bi-directional.

The digital processing system 10 includes an input interface coupled to buffer memory 14. In turn, the buffer memory 14 is coupled to a first data processor 16. A user interface 19 is coupled to the first data processor 16. The first data processor 16 has a formatter 18 and an annotator 20, which may represent software instructions suitable for execution by the first data processor 16. The annotator 20 communicates with a transmitter 22. The transmitter 22 places the data in a suitable physical format for transmission via a transmission line 24 to a receiver 28 of the printer 26.

The printer 26 includes the receiver 28 coupled to a second data processor 37. The second data processor 37 has a detector 30 that communicates with a print settings processor 32 (e.g., data extractor) and an interpreter 36. Further, the second data processor 37 has a print settings instructor 34. The print settings processor 32 communicates with the print settings instructor 34. The detector 30, the print settings processor 32, the print settings instructor 34, and the interpreter 36 may represent software instructions suitable for execution by the second data processor 37.

With regards to the digital processing system 10, the input data interface 12 may represent a communications interface that communicates with a remote computer (not shown) over a communications network, a reader of an optical storage medium, a reader of a magnetic storage medium, a reader of a portable electronic memory card, or any other technique for loading a bitmap-containing file into the digital processing system 10. The inputted bitmap-containing file is transferred or copied from the input data interface 12 to the buffer memory 14. The bitmap-containing file in the buffer memory 14 is accessible to the first data processor 16. Further, the first processor retrieves the bitmap-containing file or portions thereof from the buffer memory 14 in a manner consistent with the processing throughput of the first data processor 16.

In an alternate embodiment, the input data interface 12 may represent a user interface for obtaining the bitmap-containing file from a database or a graphical user interface 19 creating the bitmap-containing file in an application program resident in the digital processing system.

The user interface 19 allows a user or operator of the printer 26 to enter or establish printing settings in accordance with preset default options, user preferences, available options, a menu-driven selector, or the like. The user interface 19 is coupled to the first data processor 16. The user interface 19 communicates with the formatter 18.

In one embodiment, the formatter 18 places a set of entered printing settings into a textual format, such as an American Standard Code for Information Interchange (ASCII) format. ASCII refers to a binary code for representing text, alphanumerical characters, and other symbols. For example, ASCII usually includes seven or eight digits for a binary code that represents a letter.

The annotator 20 adds a set of printing settings in the textual format to an image file directory component of a bitmap-containing file. The printing settings may refer to printing characteristics or attributes that affect the visual appearance of an image on a printable recording medium (e.g., paper). For example, printing settings include page layout, page background, and appearance attributes of an image or images on the page. Further, printing settings may include the manner in which jobs are printed on a printer or associated processing equipment, even if such printing settings are not ultimately evident upon a visual inspection of the resultant image on the printable recording medium. For example, production printing settings include printing processing parameters that are customary, appropriate, or desired to promote time-efficient and accurate printing operations in a high-volume commercial printing environment. Accordingly, production print settings include features such as duplexing (i.e., making two-sided copies from various original formats), binding, pamphlet making, or other parameter that materially impact the cost, efficiency, convenience, or accuracy of a mass printing process.

The annotator 20 adds the printing settings to at least one directory data block of the directory component. In one example, the production printing settings are added to an additional block, which is referred to as an image file directory block of a TIFF file. As used herein, a bitmap-containing file that contains printing settings may be referred to as an annotated bitmap-containing file.

The transmitter 22 places the annotated bitmap-containing file in a suitable physical layer format for transmission to the receiver 28 of the printer 26 via the transmission line 24. In one example, if the transmission line 24 represents a multi-conductor cable, the transmitter 22 may provide a sequence of logic level signals that represent the annotated bitmap-containing file. In another example, the transmitter 22 may provide a pulse code modulation signal, a pulse-width modulation signal, a pulse-amplitude modulation signal, or any other suitable data format for transmission over the transmission line 24. In yet another example, where the transmission line 24 represents a connection through a communications network (e.g., public switched telephone network), the transmitter 22 and the receiver 28 may represent modems or packet transceivers.

The detector 30 accepts the received bitmap-containing file as input. The detector 30 determines whether the received bitmap-containing file is in a recognized format, such as a standard file format. The recognized format may include TIFF format, a PostScript format, a page description language (PDL), some variant of the foregoing, or another format recognized by the printer 26. A PostScript format refers to an object-oriented language for printing documents on a printer 26. The PostScript format treats images as geometrical objects or vector graphics that are represented by mathematical formulae. A page description language provides instructions for printing a document to a printer 26 as bit-mapped graphics or vector graphics, for example. The detector 30 sends a data message to the interpreter 36 that indicates a particular recognized format or actuates the interpreter 36. If the detector 30 recognizes a recognized format, that an interpreter 36 of the printer 26 does not support, the detector 30 may take remedial measures, such as alerting a user of the printer 26 via a user interface associated with the printer 26.

The print settings processor 32 accesses the directory component of the received bitmap-containing file. The print settings processor 32 may comprise a data copier or a data extractor. A data copier accesses the directory component without altering the directory component or the data component of the annotated bitmap-receiving file. A data extractor accesses the image file directory component by deleting at least a portion of the directory component or by leaving the directory component completely intact. Although the print settings processor 32 could delete the print settings in the directory component after sending the printing settings to the print settings instructor 34, the edited bitmap-containing file would not be suitable for efficient repeated execution of print jobs by the printer 26. Because the directory component is preferably a recognized element of a bitmap-based printing format, such as tagged image file format, the print settings processor 32 preferably retains the printing settings in the annotated bitmap-receiving file in an unaltered state to allow multiple executions of print jobs by the printer 26 without loss of the advantages both the bitmap-based printing format and the added print settings (e.g., production printing settings).

The print settings processor 32 extracts, copies, or otherwise obtains print settings from the directory component for printing the bitmap-containing file. The printing settings may support supplementary printing techniques that are geared toward production printing, high-volume printing, specialty printing, or the like. The print settings processor 32 provides the obtained printing settings and any accompanying instructions to the print settings instructor 34, where the print settings instructor 34 applies the print settings to the bitmap-containing file. The print settings processor 32 may affect the layout, scaling, resolution, annotation, editing, printing procedure, visual appearance, or other printing characteristics associated with the bitmap-containing file. The print settings instructor 34 cooperates with the interpreter 36. The print settings instructor 34 and the interpreter 36 may process a printing job defined by the bitmap-containing file in a serial or contemporaneous manner.

The bitmap-containing file is fed into the interpreter 36 which may interpret the bitmaps in the data component of the bitmap-containing file in accordance with standard techniques. In one example, the interpreter 36 ignores the printing settings that remain present in the bitmap-containing file even after processing by the print settings processor 32. In another example, the interpreter 36 does not detect the print settings because they are deleted from the image file directory component by the print settings processor 32, where only a single execution is required.

The interpreter 36 is associated with at least one corresponding recognized file format. For example, a particular interpreter 36 may be capable of interpreting one or more different recognized file formats. Although the printer 26 includes a single interpreter 36 as shown in FIG. 1, in an alternate embodiment the printer 26 may include one interpreter 36 per each different recognized file format. For instance, separate interpreters could be used for a TIFF file format and a PostScript file format.

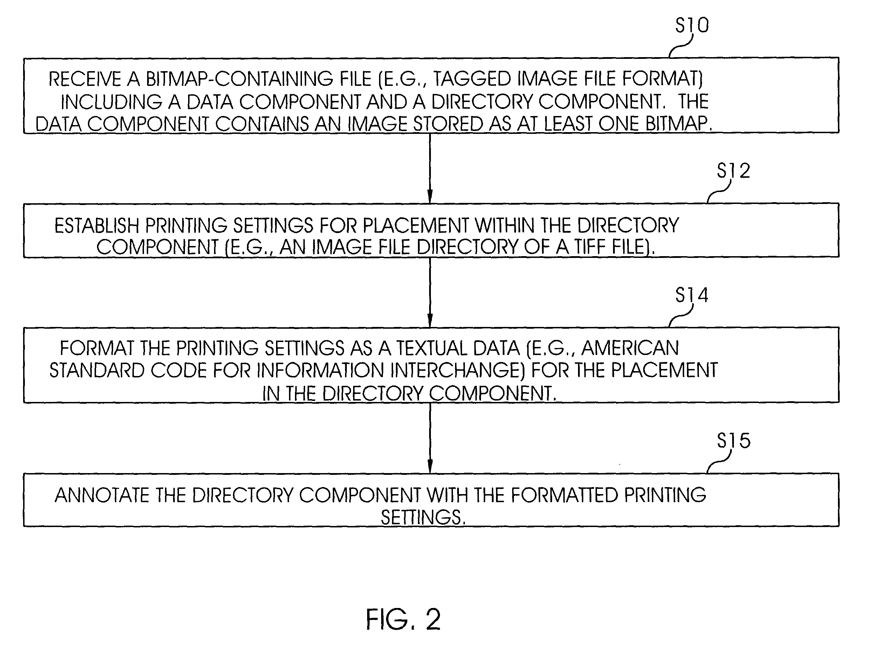

FIG. 2 shows a method for enhancing the printing performance of a bitmap-containing file that facilitates reduced processing resources, a more rapid interpretation of printing instructions by a printer 26, or both. Further, because the images of a document are presented as at least one bitmap, the security or integrity of the image data component may be greater than for documents, which are converted to textual files. Bitmap files are readily encrypted or encoded with error correction schemes. Further, bitmap images tend to be more tolerant of data corruption than their textual counterparts. The method of FIG. 2 begins with step S10.

In step S10, a digital processing system 10 receives a bitmap-containing file (e.g., TIFF file) including a data component and a directory component (e.g., an image file directory of a TIFF file). The data component contains an image stored as at least one bitmap. The directory component includes reference information (i.e., indexing information) on the data component or the bitmap-containing file. In one example, the digital processing system 10 receives the bitmap-containing file at an input data interface 12, such as an optical reader for reading an optical disk.

The data component may contain data blocks and the directory component may include directory blocks. The data blocks and the directory blocks are arranged in any sequential order with respect to one another. A preceding directory block preferably contains a reference to a following directory block to support various sequential orders.

After step S10 in step S12, the digital processing system 10 establishes print settings (e.g., production print settings) for placement within the directory component. For example, the user interface 19 cooperates with the first data processor 16 to arrange print settings for placement within at least one block of the image file directory component. The source of the print settings includes a user entering or establishing the print settings via a user interface 19 coupled to the first data processor 16 of the digital processing system 10.

In step S14, the first data processor 16 formats the entered print settings as textual data for placement in the directory component. For example, the formatter 18 of the first data processor 16 formats the print settings as textual data in an American Standard Code for Information Interchange (ASCII) format. Further, step S14 may include establishing a syntax of the print settings in a manner compatible with a proprietary digital syntax scheme.

After step S14 in step S15, the first data processor 16 annotates the directory component of the bitmap-containing file with the formatted print settings. For example, the annotator 20 of the first data processor 16 places the formatted print settings into at least one directory data block of the directory component (e.g., image file directory of an TIFF file) to form an annotated bitmap-containing file.

In the context of a TIFF file as the bitmap-containing file, the method of FIG. 2 supports time-efficient printing of an unwrapped or native TIFF file. The native TIFF file is a standard TIFF file, which is not wrapped in any other PDL to achieve improved printing performance and expanded print settings. The user may specify print settings for the standard TIFF file to the same degree as is currently available with various native PDL formatted document files. The standard TIFF file contains an Image File Directory (IFD) data structure as the directory component of the bitmap-containing file. The IFD provides reference information, such as indexing of the contents of the TIFF file. The standard TIFF file is annotated by adding print settings (e.g., production print settings) to the Image File Directory (IFD) structure within the TIFF file. The print settings are preferably formatted as textual data, which is distinguished from the bitmaps in the data component of the TIFF file. For example, the textual data may include a ASCII text within a single IFD data block (e.g. an additional IFD data block added solely to support print settings).

The syntax for the print settings may be one of variety of different types. In one configuration, the syntax includes a proprietary syntax, such as the existing Heidelberg Digital Document Structured Convention comments (DSC)/KDK syntax, which is currently commercially available from Heidelberg Digital, L.L.C. DSC is defined as set forth in the following publication: Adobe Systems Incorporated, *PostScript Language Reference Manual* (Second Edition). KDK refers to a set of proprietary extensions associated with DSC comments. KDK may support various engines within printing processing equipment to provide options such as compiling a print job without printing it, placing a print job into a booklet form, rotating an image within a document, inserting separation sheets at selected locations within a print job, or other printing settings. Although KDK extensions are referenced herein, the present invention may be applied to another proprietary syntax such as XRX extensions, as defined by Xerox Corporation.

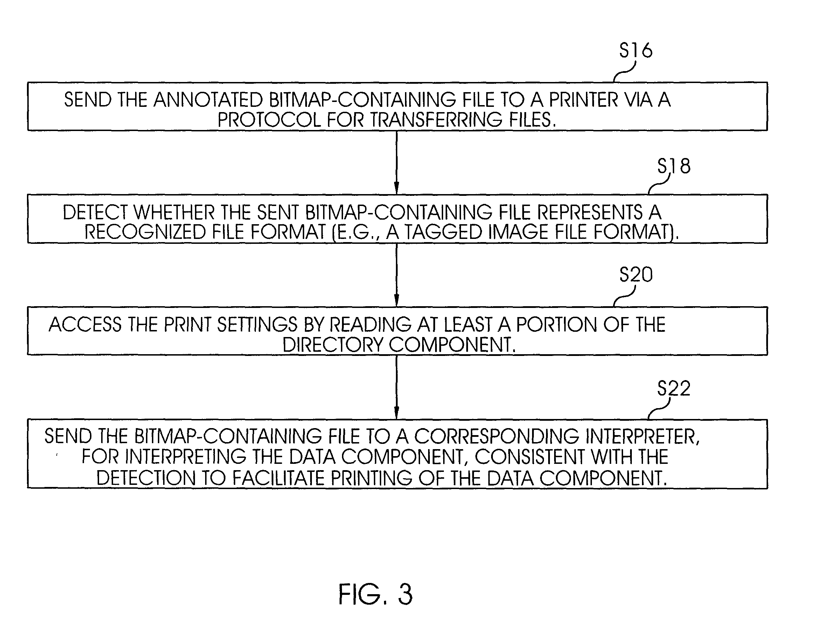

The method of FIG. 3 may follow and supplement the method of FIG. 2. The method of FIG. 3 begins with step S16. Following step S15 in step S16, the annotated bitmap-containing file is sent to a printer 26 (e.g., a production printer) via a protocol for transferring files. The printer 26 receives the annotated bitmap-containing file via receiver 28 or via a suitable transceiver instead of receiver 28.

In step S18, the printer 26 detects whether the sent bitmap-containing file represents a recognized file format, such as a Tagged Image File Format.

In step S20, the printer 26 accesses the print settings from the directory component of the received bitmap-containing file. A print settings processor 32 of the printer 26 may access at least one directory block of the directory component. In accordance with one example, step S20 may include copying the print settings (e.g., production print settings) from at least one directory data block of the image file directory component to facilitate time-efficient prospective execution of the same print job. In accordance with another example, step S20 includes extracting the print settings from at least one directory data block of the image file directory component without altering the data component and the image file directory component to facilitate time-efficient prospective execution of the same print job.

In step S22, the digital processing system 10 sends a bitmap-containing file to a particular interpreter 36 for printing the data component based on the detected recognized file format. The particular interpreter 36 is associated with at least one corresponding recognized file format (e.g., TIFF). For example, a particular interpreter 36 may be capable of interpreting one or more different recognized file formats. If the detected bitmap-containing file is expressed as a tagged image file format, the print settings processor 32 sends the bitmap-containing file to a Tagged Image File Format (TIFF) interpreter 36 or another capable interpreter for processing.

In the context of a TIFF file as the bitmap-containing file, the method of FIG. 3 promotes time-efficient processing in preparation for printing of the TIFF file. The TIFF file is transmitted to a printer 26 by one of many available print or remote file protocols. The printer 26 detects the TIFF file as a document for printing (i.e., a job). The detector 30 detects each job to identify it as a native TIFF file, versus another PDL such as PS, PDF, or PCL. Once detected as a standard TIFF file, the printing settings (e.g., production print settings) are copied out of the annotated IFD. Next, the printer 26 sends the TIFF file to a native TIFF interpreter 36 of the printer 26. The native TIFF interpreter 36 reads the bit-mapped image data from one or more data blocks the TIFF file. The read image data is readily printed out on a printable medium (e.g., paper or film) in an efficient manner consistent with the printing settings. The method promotes the reduction of processing resources and enhanced time efficiency because there is no need to translate the TIFF file into bitmap form for the printer 26. The TIFF file is already in bitmap form. In contrast, many PDL's other than TIFF need to perform a translation from a page description language to a bitmap. The print settings, read from the directory component of the TIFF file, are used by the printer 26 to instruct a marking engine of the printer 26 on how to physically print the bit-mapped image data onto the printable recording medium.

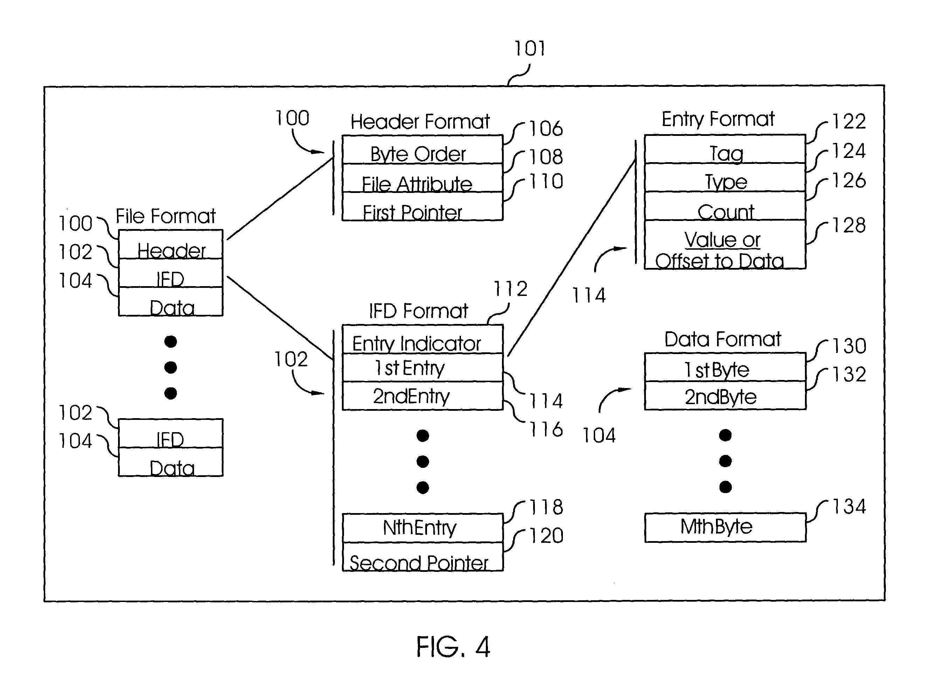

FIG. 4 illustrates the data structure of a TIFF file 101, which is an example of a bit-map containing file used to practice the invention. The TIFF file 101 basically includes a header 100, an image file directory (IFD) component and a data component. The IFD component includes one or more IFD blocks 102. The header 100 contains an offset address to the first IFD block 102 within the TIFF file 101. The data component includes multiple data blocks 104 as shown in FIG. 4. The data blocks 104 may contain TIFF tag detail, image data, or both.

The header 100 allocates storage units within the header 100 for reference to data that is useful for interpreting or locating the contents of the TIFF file 101. (Storage units refer to bits, bytes, or words of data). For example, the header 100 stores a byte order 106, a file attribute 108, and a first pointer 110. The byte order 106 indicates the order in which bytes or words for the data blocks 104 are organized within the file 101. The file attribute 108 indicates a file attribute 108, such as file size, compression scheme, or any other suitable data characteristic that is useful for interpreting the TIFF file 101. The first pointer 110 provides an address that points to the first IFD block 102 within the TIFF file 101.

The IFD block 102 allocates storage units within the IFD block 102 on print settings or data on indexing of the information in the file 101. For example, the IFD data block 102 includes an entry indicator 112, a first entry 114, a second entry 116, and an nth entry 118, where n is the total number of entries. The nth entry 118 may be followed by a second pointer 120. The entry indicator 112 indicates n, which is the total number of entries within the IFD block 102. The second pointer 120 provides an address that points to the next IFD block until the value for the offset to the next IFD is zero, indicating that the last IFD within the TIFF file 101 has been reached. If the value for an entry cannot fit within a defined maximum storage space limit (e.g., 4 bytes of storage space per word), the value becomes a reference pointer (i.e. offset within the file) to the actual data, which is stored elsewhere in the TIFF file 101.

The data block 104 includes a plurality of bytes ranging from a first byte 130 to an mth byte (134), where m is the maximum number of bytes per data block 104. Although m may equal n if the entry words in the IFD block 102 provide information about each byte in the data block 104, m and n may differ.

Each entry within the IFD block 102 may include a tag 122, a type 124, a count 126, and a value 128 or offset to data byte, which may be used to express printing settings. The tag 122, type 124, count 126 and value 128 are defined as set forth in any applicable TIFF standard, which is used to practice the invention. The tag 122 represents an attribute that is associated with the image data (e.g., data block 104 or value 128). For example, a tag 122 may refer to Imagewidth, Compression, Xresolution, or some other attribute defined in accordance with any applicable TIFF standard. The type 124 defines the type of data that is associated with the (following) value 128. For example, a type 124 may include a byte (i.e., 8-bit unsigned integer) ASCII (i.e. 8-bit byte that contains a 7 bit ASCII code), or another type, which is defined in accordance with any applicable TIFF standard. A count 126 refers to the number of entities of type 124 that are in the value 128. A value 128 provides an actual data entry, which may fall within a defined range of permissible values. If the value 128 exceeds a maximum storage size, the value 128 becomes a pointer (i.e., offset to data) to the next entry within the IFD block 102. In sum, the tag 122 defines what the data is in the value 128 or elsewhere in the TIFF file 101. The type 124 and the count 126 help the software to extract the correct data from the TIFF file 101.

The print settings (e.g., production print settings) are stored as data within the TIFF file 101. Accordingly, a unique TIFF tag 122 exists to identify one or more entries (e.g., 114, 116, and 118) as the print settings. The print settings entry (e.g., production print settings entry) may be contained in an IFD block 102 that has only one entry, being the printing settings entry. The IFD block 102, containing the print settings, may be a new IFD block 102 added to the TIFF file 101. The new IFD block 102 is preferably added to the end of the TIFF file. For example, the processing system 10 finds the last IFD block 102 within an existing TIFF file, and changes its second pointer 120 from a value of zero to the address of the added IFD block 102 where the new IFD block, with printer settings, starts.

The printing settings will be formatted in a manner consistent with syntax rules and definitional constraints of the applicable printer. For example, if the printer 26 comprises the Digimaster 9110 printer, commercially available from Heidelberg Digital, L.L.C., the printer would use a proprietary production print settings format referred to as DSC/KDK. The DSC/KDK format follows an ASCII syntax. The entry type 124 of an entry in the IFD block 102 would then be an ASCII code. The second pointer 120 that points to the last IFD block 102 would locate an ASCII block of data. Although the print settings are preferably expressed in a textual format, in an alternate embodiment, the print settings may be in a binary format. The format of the print settings is not critical so long as the format of the print settings is consistent with its storage space in at least one IFD block and the overall scheme of the bitmap-containing file. The format of this data would be understood by the production printer 26 that extracts this data from the TIFF file.

In an alternate embodiment, the print settings may be stored in a data block 104 of the data component, rather than an IFD block 102. The print settings stored in the data block 104 may be stored in a binary format, for example, to readily support data manipulation associated with encryption or error correction schemes.

The file format does not require the exact layout shown in FIG. 4. For example, because the IFD block 102 contains an offset to the next following IFD block, data blocks 104 can be interspersed throughout the file. The exact layout may depend on the TIFF generator. The particular layout or operation of the TIFF generator does not diminish the applicability of the invention to different layouts other than that shown in FIG. 4.

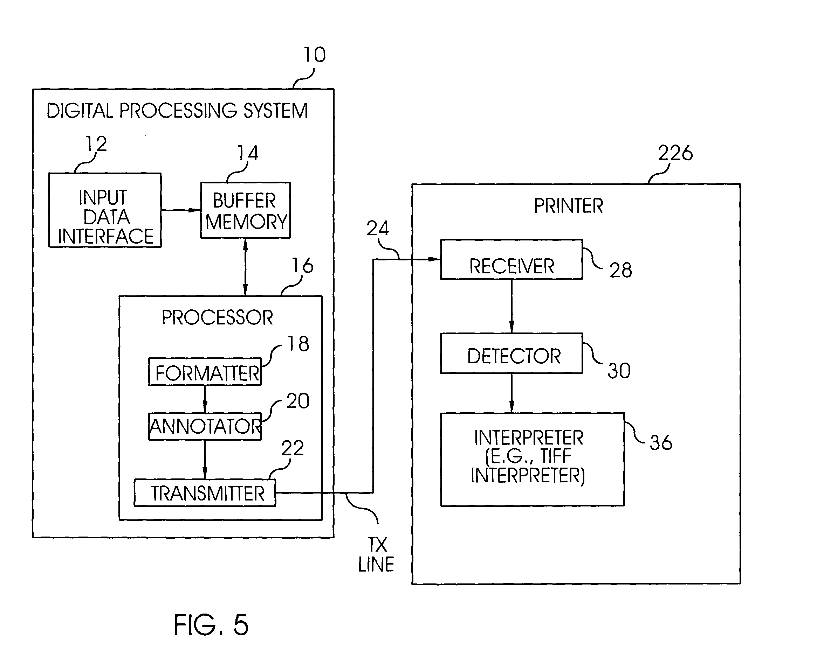

The system of FIG. 5 is similar to the system of FIG. 1 except the printer 26 of FIG. 1 differs from the printer 226 of FIG. 5. The printer 226 of FIG. 5 includes a detector 30 and at least one interpreter 36. The interpreter 36 is compatible with a recognized file format, such as a tagged image file format. If a bitmap-containing file is annotated in accordance with the procedure of FIG. 2, the annotated bitmap-containing file may be printed on the printer 226 of FIG. 5 because the printer 26 is programmed to ignore at least one directory block, of the directory component (e.g., image file directory of a TIFF file), containing printing settings. Advantageously, if the interpreter 36 comprises a standard TIFF interpreter 36, the TIFF interpreter 36 conventionally ignores the printer 226 settings in the image file directory component without any special modifications or processing techniques. Accordingly, the annotated bitmap-containing file associated with the invention is applicable to the standard printer 226 of FIG. 5 and the enhanced printer 26 of FIG. 1. The bitmaps of the annotated bitmap containing file represent a robust form of data expression that is generally less susceptible to inadvertent or intentional data corruption than textual data formats. Accordingly, the invention promotes the integrity of printing data and the efficiency of printing operations.

The advantages of this invention over the currently available approaches include the following items:
(1) The large existing TIFF based document libraries do not have to be modified to benefit from high printing performance of the invention. At worst, some library data has to be converted to a proprietary format to be able to take advantage of a production printer 26.
(2) The production print settings for each document can be identified as the bitmap-containing file (e.g., TIFF file) is being sent to the production printer 26. The production print settings are simply added to the bitmap-containing file as identified and then sent to the production printer 26.
(3) An original stored TIFF document that doesn't contain any production print settings can be amended with the production print settings and stored back into the document repository. This only adds a couple hundred bytes of data (worst case) to the file. The typical TIFF file size is on the order of tens of thousands to millions of bytes, due to the size of bit-mapped data.
(4) There is no compromise on the security integrity of the image data. The image data is never touched (i.e. copied, translated, interpreted).
(5) Any TIFF file amended with the production print setting IFD can still be printed to other printers 26 that understand standard TIFF format. The added IFD is ignored by the rules of TIFF.

The foregoing description of the method and system describes several illustrative examples of the invention. Modifications, alternative arrangements and variations of these illustrative examples are possible and may fall within the scope of the invention. Accordingly, the following claims should be accorded the reasonably broadest interpretation, which is consistent with the specification disclosed herein and not unduly limited by the aspects of the preferred embodiments disclosed herein.

### REFERENCE LIST

- 10: digital processing systems
- 12: input data interface
- 14: buffer memory
- 16: first data processor
- 18: formatter
- 19: user interface
- 20: annotator
- 22: transmitter
- 24: transmission line
- 26: printer
- 28: receiver
- 30: detector
- 32: print settings processor
- 34: print settings instructor
- 36: interpreter
- 37: second data processor
- 100: header
- 101: TIFF file
- 102: IFD block
- 104: multiple data block
- 106: byte order
- 108: file attribute
- 110: first point
- 112: entry indicator
- 114: first entry
- 116: second entry
- 118: nth entry
- 120: second pointer
- 122: tag
- 124: type
- 126: count
- 128: value
- 130: first byte
- 132: second byte
- 134: mth byte
- 226: printer

## Claims

1. A method of enhancing the printing performance of a bitmap-containing file for storing an image as at least one bitmap, the method comprising the steps of:
receiving a bitmap-containing file including a data component and an directory component, the data component containing an image stored as at least one bitmap;
establishing print settings for placement within the directory component; and
formatting the print settings as textual data for the placement in the directory component.

2. The method according to claim I wherein the receiving step further comprises receiving a tagged image file format as the bitmap-containing file.

3. The method according to one of claims 1 or 2 wherein the receiving step comprises receiving a plurality of data blocks as the data component and a plurality of directory blocks as the directory component.

4. The method according to one of claims 2 or 3 wherein the data blocks and the directory blocks are arranged in any sequential order with respect to one another, a preceding directory block containing a reference to a following directory block.

5. The method according to one of claims 1 to 4 wherein the textual data is in an American Standard Code for Information Interchange (ASCII) format.

6. The method according to one of claims 1 to 5 wherein the formatting step includes establishing a syntax of the print settings to be compatible with a proprietary digital syntax scheme.

7. The method according to one of claims 1 to 6 further comprising the step of:
sending the formatted bitmap-containing file to a production printer via a protocol for transferring files.

8. The method according to claim 7 further comprising the step of:
detecting whether the sent bitmap-containing file represents a tagged image file format;
accessing the production print settings from the directory component; and
sending the bitmap-containing file to a tagged image file format interpreter for printing the data component if the detected bitmap-containing file represents the tagged image file format.

9. The method according to claim 8 wherein the accessing step comprises copying the print settings from at least one directory data block of the directory component.

10. The method according to claim 8 wherein the accessing step comprises extracting the print settings from at least one directory data block of the directory component without altering the data component and the directory component.

11. The method according to one of claims 1 to 10 further comprising the step of:
printing the file on a printer compatible with a standard tagged image file format, the printer ignoring at least one directory block, of the directory component, containing printing settings.

12. A system of enhancing the printing performance of a tagged image file format file, the system comprising:
a buffer memory (14) for receiving a tagged image file format file including a data component and a directory component, the data component containing at least one image stored as a bitmap;
a processor (16) for placing production print settings within the directory component; and
a formatter (18) for formatting the production print settings as textual data in the directory component, the formatter (18) associated with the processor.

13. The system according to claim 12 wherein the data component comprises a plurality of data blocks and wherein the directory component comprises a plurality of directory blocks.

14. The system according to claim 13 wherein the data blocks and the directory blocks are arranged in an sequential order with respect to one another, a proceeding directory block containing a reference to at least one following directory block.

15. The system according to one of claims 12 to 14 wherein the textual data is in an American Standard Code for Information Interchange (ASCII) format.

16. The system according to one of claims 12 to 15 wherein the formatter (18) establishes the syntax of the production print settings to be compatible with a proprietary digital syntax scheme.

17. The system according to one of claims 12 to 16 further comprising a transmitter (22) in communication with the transmitter for sending the formatted file to a production printer (26) by a file protocol.

18. The system according to claim 17 further comprising:
a detector (30) for detecting whether the sent bitmap-containing file is a standard tagged image file format file;
a print product processor (37) for accessing production print settings from the directory component; and
an interpreter (36) in communication with the print production processor for printing the data component.

19. The system according to claim 18 wherein the print production processor copies (37) the production print settings from at least one directory data block of the directory component.

20. The system according to claims 18 or 19 wherein the print production processor (37) extracts the production print settings from at least directory data block of the image file directory without altering the data component and the directory component.

21. The system according to one of claims 12 to 20 wherein a printer (26) is coupled to one of the processor (40) and the formatter (18), the printer compatible with documents in a standard tagged image file format file, the printer adapted to ignore at least one directory block, of the directory component, containing production printing settings.
